# EUROPEAN PATENT SPECIFICATION

(11) **EP 1 688 241 B1**
(45) Date of publication and mention of the grant of the patent: **02.06.2010**
(21) Application number: 04819340.3
(22) Date of filing: 22.11.2004
(51) Int. Cl.: B29D 30/30

(54) **PNEUMATIC RADIAL TIRE PRODUCION METHOD AND BELT TREAD ASSEMBLY TRANSFER APPARATUS USED FOR THE SAME**
RADIALLUFTREIFENHERSTELLUNGSVERFAHREN UND DAFÜR VERWENDETE GÜRTELLAUFFLÄCHENANORDNUNGS-ÜBERTRAGUNGSVORRICHTUNG
PROCEDE DE PRODUCTION D'UN PNEU RADIAL ET APPAREIL DE TRANSFERT D'UN ENSEMBLE CEINTURE-BANDE DE ROULEMENT MIS EN OEUVRE DANS CE PROCEDE

(30) Priority: 25.11.2003 JP 2003394299
(43) Date of publication of application: 09.08.2006
(73) Proprietor: THE YOKOHAMA RUBBER CO., LTD., Tokyo 105-8685 (JP)
(72) Inventor: HANADA, Ryoji c/o The Yokohama Rubber Co., Ltd., Kanagawa 2548601 (JP); SHIRATO, Souichirou c/o The Yokohama Rubber Co.Ltd, Kanagawa 2548601 (JP)
(74) Representative: HOFFMANN EITLE
(86) International application number: PCT/JP2004/017349
(87) International publication number: WO 2005/051641

(56) References cited:
- EP-A1- 0 071 838
- EP-A1- 0 190 532
- DE-A1- 1 579 251
- DE-A1- 2 420 329
- DE-A1- 2 459 020
- GB-A- 997 253
- GB-A- 1 149 723
- JP-A- 6 254 990
- JP-A- 2001 277 376
- JP-A- 2001 277 377
- JP-A- 2003 071 947
- JP-A- 2003 071 948
- JP-A- 2003 191 349

## Description

### TECHNICAL FIELD

The present invention relates to a pneumatic radial tire production method, and to a belt tread assembly transfer apparatus used for transferring a belt tread assembly. By the method, a cylindrical belt tread assembly may be pressure-bonded to a primary green tire inflated in a toroidal shape.

### BACKGROUND ART

In producing a pneumatic radial tire, while a primary green tire including a carcass layer is formed; a cylindrical belt tread assembly including belt layers is formed; the belt tread assembly is transferred to the outer peripheral side of the primary green tire by use of a transfer apparatus; and the belt tread assembly is pressure-bonded to the primary green tire inflated in a toroidal shape (for example, see Japanese patent application *KOKAI* publication No. Hei 11 (1999)-333945).

The transfer apparatus described above has a plurality of holding members which hold the belt tread assembly from the outer peripheral side. The respective holding members have holding surfaces parallel to an axial direction of the belt tread assembly. The holding members hold the cylindrical belt tread assembly in a state where the holding members are in close contact with an outer peripheral surface of the assembly. The primary green tire is inflated in a state where the belt tread assembly is held by use of the transfer apparatus as described above, and the primary green tire and the belt tread assembly are pressure-bonded to each other. Thereafter, the transfer apparatus is moved and stitching is performed for the belt tread assembly. Thus, a secondary green tire is completed.

However, in the case where the primary green tire and the belt tread assembly are pressure-bonded to each other in the state where the belt tread assembly is held by use of the transfer apparatus having flat holding surfaces, a tread shape of the completed secondary green tire is parallel to a tire axial direction immediately after the completion thereof. However, the tread shape is deformed so as to gradually sink inward in a tire radial direction. Thus, an increased difference between the shape of the secondary green tire and a mold shape adversely affects uniformity of the tire.

Moreover, in a conventional pneumatic radial tire production method, when a cylindrical belt tread assembly is pressure-bonded to a toroidal primary green tire, it is difficult to tuck in both ends of laminated belt layers toward the primary green tire. As a result, in a vulcanized product tire, trapped air is likely to remain, particularly, between the both ends of the belt layers and the carcass layer. Thus, a separation failure, a so-called blister failure, may occur.

GB-A-1149723 discloses combinations of features falling within the scope of the preamble of independent Claim 1 and independent Claim 6.

Further relevant background art is disclosed in DE 24 20 329 A1; DE 15 79 251 A1; EP-A1-0071 838; DE 24 59 020 A1; and EP-A1-0 190 532.

### SUMMARY OF THE INVENTION

According to a first aspect of the present invention, there is provided a pneumatic radial tire production method comprising the steps of: forming a primary green tire including a carcass layer; forming a cylindrical belt tread assembly including belt layers; transferring the belt tread assembly to the outer peripheral side of the primary green tire by use of a transfer apparatus; and pressure-bonding the belt tread assembly to the primary green tire inflated in a toroidal shape, wherein the primary green tire and the belt tread assembly are pressure-bonded to each other in a state where the transfer apparatus allows a center portion of the belt tread assembly to swell while holding both sides of the belt tread assembly, characterized in that: holding members of the transfer apparatus hold the belt tread assembly in a state where each holding member comes into contact with both sides of the belt tread assembly but never comes into contact with the center portion of the belt tread assembly.

As one form of the belt tread assembly transfer apparatus, it is preferable to use the following kind of transfer apparatus. Specifically, according to a second aspect of the present invention, there is provided a belt tread assembly transfer apparatus for transferring a belt tread assembly, comprising: a plurality of holding members for holding the belt tread assembly from an outer peripheral side, wherein such curvature as to reduce an inside diameter toward outside in a width direction of the belt tread assembly is given to holding surfaces of the respective holding members characterized in that: braces are provided on the holding surfaces of the respective holding members for holding the belt tread assembly in a state where the holding members come into contact with both sides of the belt tread assembly but do not come into contact with the center portion of the belt tread assembly when the belt tread assembly being held is pressure-bonded to a primary green tire inflated in a toroidal shape.

Embodiments of the present invention relate to a pneumatic radial tire production method which can enable one to improve uniformity of a tire and to prevent a separation failure caused by trapped air.

An advantage obtainable with embodiments of the present invention is thus to provide a pneumatic radial tire production method which enables one to improve uniformity of a tire and also to prevent a separation failure caused by trapped air, and a belt tread assembly transfer apparatus which may be used for the method.

In embodiments of the present invention, the primary green tire and the belt tread assembly are pressure-bonded to each other in a state where the transfer apparatus allows a center portion of the belt tread assembly to swell while holding both sides of the belt tread assembly. Accordingly, a shape of a secondary green tire is approximated to a mold shape. Thus, uniformity of the tire can be improved.

Moreover, when the cylindrical belt tread assembly is pressure-bonded to the toroidal primary green tire, both ends of laminated belt layers can be tucked in toward the primary green tire. Accordingly, air is hardly trapped between the both ends of the belt layers and the carcass layer. Thus, it is possible to effectively prevent a separation failure caused by trapped air.

In the preferred transfer apparatus described above, the braces are provided on the holding surfaces in the transfer apparatus, in order to prevent the belt tread assembly held by the holding members from moving.

Meanwhile, in embodiments where the transfer apparatus described above has a structure in which the holding surfaces of the respective holding members are divided in the width direction of the belt tread assembly, it is preferable that a width of each of the divided holding surfaces of each holding member is set to 5 to 30% of a width of the innermost laminated belt layer, in order to effectively prevent the separation failure caused by the trapped air without impairing workability in pressure-bonding.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a front view schematically showing an embodiment of belt tread assembly transfer apparatus according to the present invention;
Fig. 2 is a meridian half sectional view showing an embodiment of a belt tread assembly transfer apparatus according to the present invention, as may be used in a pneumatic radial tire production method according to the present invention;
Fig. 3 is a meridian half sectional view showing a belt tread assembly transfer apparatus as it may be used in an embodiment of a pneumatic radial tire production method according to the present invention; and
Fig. 4 is a meridian half sectional view showing a belt tread assembly transfer apparatus as it may be used in an embodiment of a pneumatic radial tire production method according to the present invention.

### DESCRIPTION OF THE ILLUSTRATED EMBODIMENTS

With reference to the accompanying drawings, embodiment of the present invention, as well as further described examples, will be described in detail below.

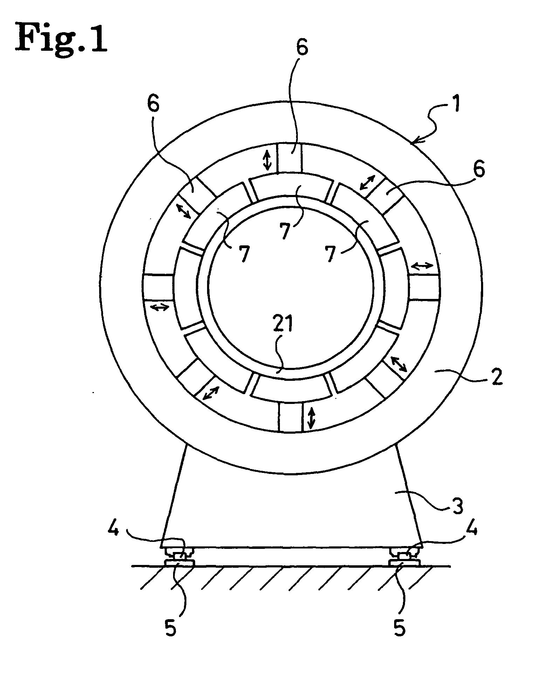

Fig. 1 schematically shows a belt tread assembly transfer apparatus suitable for use in accordance with the present invention. As shown in Fig. 1, the transfer apparatus 1 has a configuration in which a ring-shaped frame part 2 is mounted on a truck 3, and runs on rails 5 with a plurality of wheels 4 attached to the truck 3. In the frame part 2, a plurality of radially retractable arm members 6 are provided at even intervals in a circumferential direction. Moreover, holding members 7 are attached to tips of the arm members 6, respectively. The plurality of holding members 7 hold a cylindrical belt tread assembly 21 from an outer peripheral side when the arm members 6 are extended inward in the radial direction of the frame part 2.

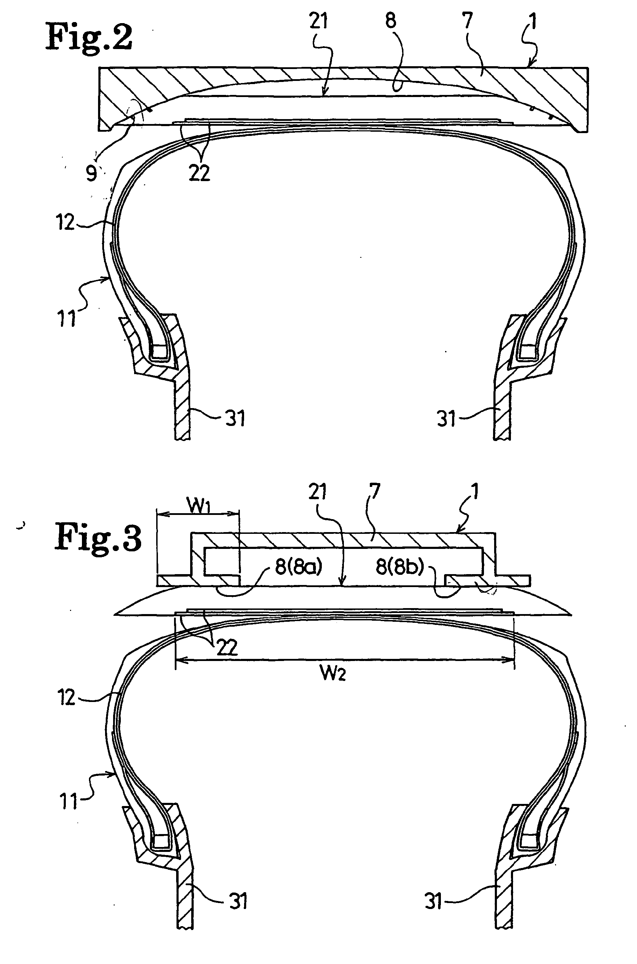

Fig. 2 shows a first embodiment of a belt tread assembly transfer apparatus according to the present invention, as may be used in a pneumatic radial tire production method according to the present invention. In Fig. 2, the holding member 7 of the transfer apparatus 1 has a structure in which such curvature as to reduce an inside diameter toward outside in a width direction of the belt tread assembly 21 is given to a holding surface 8. Thus, the holding member 7 holds the belt tread assembly 21 in a state where the member comes into contact with both sides of the belt tread assembly 21 but never comes into contact with a center portion.

In the case where a pneumatic radial tire is produced by use of the transfer apparatus described above, first, a primary green tire 11 including a carcass layer 12 is formed, and the cylindrical belt tread assembly 21 including belt layers 22 is formed (see Fig. 2). Next, by use of the transfer apparatus 1, the belt tread assembly 21 is transferred to an outer peripheral side of the primary green tire 11 supported by a pair of bead supporting members 31. Thereafter, the belt tread assembly 21 is pressure-bonded to the primary green tire 11 inflated in a toroidal shape by reducing the mutual space between the bead supporting members 31. In this event, the belt tread assembly 21 is held on both ends thereof by the holding member 7 having the curved holding surface 8. Thus, the primary green tire 11 and the belt tread assembly 21 can be pressure-bonded to each other in a state where the transfer apparatus 1 allows a center portion of the belt tread assembly 21 to swell while holding both sides of the belt tread assembly 21. A secondary green tire thus obtained becomes a product tire through a vulcanization step. In the vulcanization step, a shape of the secondary green tire is approximated to a mold shape. Thus, uniformity of the tire can be improved.

Moreover, when the cylindrical belt tread assembly 21 is pressure-bonded to the toroidal primary green tire 11, both ends of the laminated belt layers 22 are tucked in toward the primary green tire 11. Accordingly, air is hardly trapped between the both ends of the belt layers 22 and the carcass layer 12. Thus, it is possible to effectively prevent a separation failure caused by trapped air.

In the case where, as described above, the transfer apparatus 1 has the structure in which the curvature is given to the holding surface 8 of each holding member 7, a brace formed of minute protrusions 9 may be provided, for example, on the holding surface 8 of the transfer apparatus 1, in order to prevent the belt tread assembly 21 held by the holding member 7 from moving. As the brace, it is possible to perform roughing of the holding surface 8 or to form the holding surface 8 by use of rubber, other than to provide the minute protrusions 9 on the holding surface 8.

Fig. 3 shows a belt tread assembly transfer apparatus as it may be used in an embodiment of a pneumatic radial tire production method according to the present invention. In Fig. 3, a holding member 7 of a transfer apparatus 1 has a structure in which a holding surface 8 thereof is divided in a width direction of a belt tread assembly 21. Specifically, the holding member 7 has a bridge structure in which the member strides over the belt tread assembly 21 in its width direction while dividing the holding surface 8 into a holding surface 8a and a holding surface 8b. Between the holding surfaces 8a and 8b, a space is provided. Thus, the holding member 7 holds the belt tread assembly 21 in a state where the member comes into contact with both sides of the belt tread assembly 21 but never comes into contact with a center portion.

In the case where a pneumatic radial tire is produced by use of the transfer apparatus described above, first, a primary green tire 11 including a carcass layer 12 is formed, and the cylindrical belt tread assembly 21 including belt layers 22 is formed (see Fig. 3). Next, by use of the transfer apparatus 1, the belt tread assembly 21 is transferred to an outer peripheral side of the primary green tire 11 supported by a pair of bead supporting members 31. Thereafter, the belt tread assembly 21 is pressure-bonded to the primary green tire 11 inflated in a toroidal shape by reducing the mutual space between the bead supporting members 31. In this event, the belt tread assembly 21 is held on only both ends thereof by the holding member 7 having the divided holding surfaces 8a and 8b. Thus, the primary green tire 11 and the belt tread assembly 21 can be pressure-bonded to each other in a state where the transfer apparatus 1 allows a center portion of the belt tread assembly 21 to swell while holding both sides of the belt tread assembly 21. A secondary green tire thus obtained becomes a product tire through a vulcanization step. In the vulcanization step, a shape of the secondary green tire is approximated to a mold shape. Thus, uniformity of the tire can be improved.

Moreover, when the cylindrical belt tread assembly 21 is pressure-bonded to the toroidal primary green tire 11, both ends of the laminated belt layers 22 are tucked in toward the primary green tire 11. Accordingly, air is hardly trapped between the both ends of the belt layers 22 and the carcass layer 12. Thus, it is possible to effectively prevent a separation failure caused by trapped air.

In the case where, as described above, the transfer apparatus 1 has the structure in which the holding surface 8 of each holding member 7 is divided in the width direction of the belt tread assembly 21, a width W₁ of each of the divided holding surfaces 8a and 8b of each holding member 7 may be set to 5 to 30% of a width W₂ of the innermost laminated belt layer 22, in order to effectively prevent the separation failure caused by the trapped air without impairing workability in pressure-bonding. If the width W₁ is less than 5% of the width W₂, it becomes difficult to perform the operation of pressure-bonding the primary green tire 11 and the belt tread assembly 21 to each other. On the other hand, if the width W₁ exceeds 30% of the width W₂, the effect of preventing the separation failure caused by the trapped air is reduced.

Note that, if the transfer apparatus is configured in such a manner that the space between the holding surfaces 8a and 8b can be freely changed in the holding member 7, it is made possible to support various tire sizes. In this case, it is not required to prepare a dedicated transfer apparatus for every tire size.

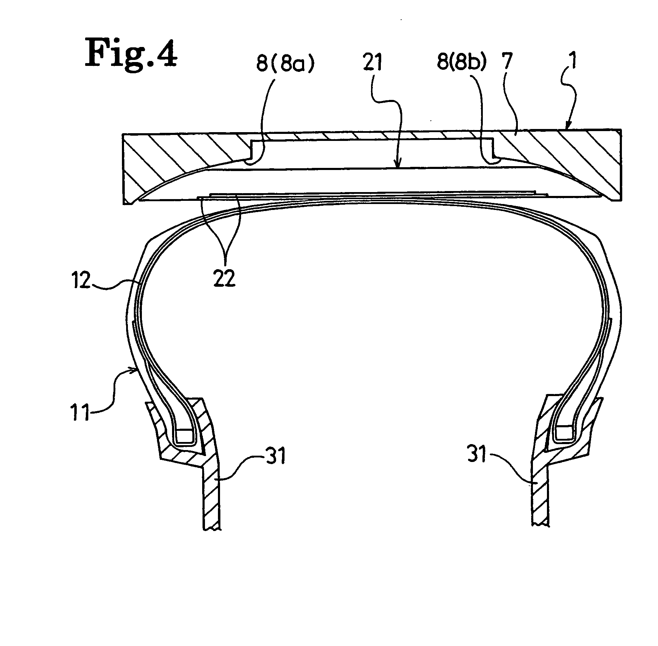

Fig. 4 shows a belt tread assembly transfer apparatus as it may be used in an embodiment of a pneumatic radial tire production method according to the present invention. This embodiment is a combination of the first and second embodiments. In Fig. 4, a holding member 7 of a transfer apparatus 1 has a structure in which a holding surface 8 thereof is divided in a width direction of a belt tread assembly 21. Specifically, the holding surface 8 is divided into a holding surface 8a and a holding surface 8b, and a space is provided between the holding surfaces 8a and 8b. Furthermore, such curvature as to reduce an inside diameter toward outside in the width direction of the belt tread assembly 21 is given to the holding surfaces 8a and 8b. In the case of using the transfer apparatus 1 as described above, the effects described above can also be obtained.

Although the illustrated embodiments of the present invention have been described in detail above, it should be understood that they are merely exemplary, and various changes, alternatives, and substitutions can be made without departing from the scope of the claims.

### EXAMPLES

In production of a pneumatic radial tire (tire size: 225/50R16) which includes two carcass layers made of polyester codes, two belt layers made of steel codes and a belt cover layer made of a nylon code, a primary green tire including the carcass layers is formed, and a cylindrical belt tread assembly including the belt layers is formed. Thereafter, the belt tread assembly is transferred to an outer peripheral side of the primary green tire by use of various transfer apparatuses. Subsequently, the belt tread assembly is pressure-bonded to the primary green tire inflated in a toroidal shape (Examples 1 and 2 and Conventional Example).

In Example 1, as shown in Fig. 4, used is a transfer apparatus having a structure in which curvature (curvature radius: 600 mm) is given to a holding surface of a holding member and the holding surface is divided in a width direction of the belt tread assembly. In Example 2, a rough-surfaced sheet is attached to the holding surface in the transfer apparatus used in Example 1. In Conventional Example, used is a transfer apparatus in which a holding member has a holding surface parallel to an axial direction of the belt tread assembly.

In the above-described tire production methods of Examples 1 and 2 and Conventional Example, 100 pneumatic radial tires are produced, respectively. Thereafter, uniformity is evaluated under the following conditions, and the number of tires in which blister failures occur is checked. Table 1 shows the results.

### Uniformity:

For test tires, radial force variation (RFV) measurement was performed under conditions including a measuring load of 4.7 kN, a rim size of 7 JJ X 16 and an air pressure of 200 kPa according to JASO C607-87. Thus, an average value of RFV was obtained for the 100 tires. The evaluation results are indicated by indices while setting Conventional Example to 100. A smaller index means better uniformity.

**Table 1**

| | Conventional Example | Example 1 | Example 2 |
|---|---|---|---|
| RFV (uniformity) | 100 | 96 | 90 |
| Number of tires in which blister failures occurred | 4 | 0 | 0 |

As is clear from Table 1, the tires obtained by use of the tire production methods of Examples 1 and 2 had better uniformity than the tires obtained by use of the tire production method of Conventional Example by comparison. Moreover, in the tire production method of Conventional Example, blister failures occurred in 4 tires. On the other hand, in the tire production methods of Examples 1 and 2, no blister failures occurred.

## Claims

1. A pneumatic radial tire production method comprising the steps of:
forming a primary green tire (11) including a carcass layer (12);
forming a cylindrical belt tread assembly (21) including belt layers (22);
transferring the belt tread assembly (21) to the outer peripheral side of the primary green tire (11) by use of a transfer apparatus (1); and
pressure-bonding the belt tread assembly (21) to the primary green tire (11) inflated in a toroidal shape,
wherein the primary green tire (11) and the belt tread assembly (21) are pressure-bonded to each other in a state where the transfer apparatus allows a center portion of the belt tread assembly (21) to swell while holding both sides of the belt tread assembly (21),
**characterized in that**:
holding members (7) of the transfer apparatus (1) hold the belt tread assembly (21) in a state where each holding member (7) comes into contact with both sides of the belt tread assembly (21) but never comes into contact with the center portion of the belt tread assembly (21).

2. The pneumatic radial tire production method according to claim 1, wherein the transfer apparatus (1) includes a plurality of holding members (7) which hold the belt tread assembly (21) from an outer peripheral side, and wherein each holding member (7) has a structure in which such curvature as to reduce an inside diameter toward outside in a width direction of the belt tread assembly (21) is given to holding surfaces (8, 8a, 8b) of the respective holding members (7).

3. The pneumatic radial tire production method according to claim 2, wherein braces (9) are provided on the holding surfaces (8) of the respective holding members (7).

4. The pneumatic radial tire production method according to claim 1, wherein the transfer apparatus (1) includes a plurality of holding members (7) which hold the belt tread assembly (21) from an outer peripheral side, and wherein each holding member (7) has a structure in which holding surfaces (8, 8a, 8b) of the respective holding members (7) are divided in a width direction of the belt tread assembly (21).

5. The pneumatic radial tire production method according to claim 4, wherein a width (W₁) of each of the divided holding surfaces (8a, 8b) of each holding member (7) is set to 5 to 30% of a width (W₂) of an innermost laminated belt layer (22) of the belt tread assembly (21).

6. A belt tread assembly transfer apparatus (1) for transferring a belt tread assembly (21), comprising:
a plurality of holding members (7) for holding the belt tread assembly (21) from an outer peripheral side,
wherein such curvature as to reduce an inside diameter toward outside in a width direction of the belt tread assembly is given to holding surfaces (8, 8a, 8b) of the respective holding members (7),
**characterized in that**:
braces (9) are provided on the holding surfaces (8, 8a, 8b) of the respective holding members (7) for holding the belt tread assembly (21) in a state where the holding members (7) come into contact with both sides of the belt tread assembly (21) but never comes into contact with the center portion of the belt tread assembly (21) when the belt tread assembly (21) being held is pressure-bonded to a primary green tire (11) inflated in a toroidal shape.

## Patentansprüche

1. Herstellungsverfahren für einen radialen pneumatischen Reifen, das die Schritte umfasst:
Ausbilden eines primären Reifenrohlings (11), der eine Karkassenschicht (12) aufweist;
Ausbilden eines zylindrischen Laufflächengürtelaufbaus (21), der Gürtelschichten (22) enthält;
Übertragen des Laufflächengürtelaufbaus (21) auf die Außenumfangsseite des Reifenrohlings (11) unter Verwendung einer Übertragungsvorrichtung (1); und
Druckbinden des Laufflächengürtelaufbaus (21) an den primären Reifenrohling (11), der in eine Ringform aufgepumpt ist,
bei dem der primäre Reifenrohling (11) und der Laufflächengürtelaufbau (21) mittels Druck in einem Zustand aneinander gebunden werden, in dem die Übertragungsvorrichtung einem Zentrumsabschnitt des Laufflächengürtelaufbaus (21) ermöglicht, anzuschwellen, während beide Seiten des Laufflächengürtelaufbaus (21) gehalten werden,
**dadurch gekennzeichnet, dass**:
Halteelemente (7) der Übertragungsvorrichtung (1) den Laufflächengürtelaufbau (21) in einem Zustand halten, in dem jedes Halteelement (7) mit beiden Seiten des Laufflächengürtelaufbaus (21) in Kontakt gerät aber nie mit dem Zentrumsabschnitt des Laufflächengürtelaufbaus (21) in Kontakt gerät.

2. Herstellungsverfahren für einen radialen pneumatischen Reifen nach Anspruch 1, bei dem die Übertragungsvorrichtung (1) eine Mehrzahl von Halteelementen (7) enthält, welche den Laufflächengürtelaufbau (21) von einer Außenumfangsseite halten, und bei dem jedes Halteelement (7) eine Struktur aufweist, in der eine Krümmung, bei der ein Innendurchmesser zur Außenseite in einer Breitenrichtung des Laufflächengürtelaufbaus (21) verringert wird, an Oberflächen (8, 8a, 8b) der entsprechenden Halteelemente (7) verliehen wird.

3. Herstellungsverfahren für einen radialen pneumatischen Reifen nach Anspruch 2, bei dem Backen (9) auf den Halteoberflächen (8) der entsprechenden Halteelemente (7) vorgesehen sind.

4. Herstellungsverfahren für einen radialen pneumatischen Reifen nach Anspruch 1, bei dem die Übertragungsvorrichtung (1) eine Mehrzahl von Halteelementen (7) enthält, welche den Laufflächengürtelaufbau (21) von einer Außenumfangsseite halten, und wobei jedes Halteelement (7) eine Struktur aufweist, in der Halteoberflächen (8, 8a, 8b) der entsprechenden Halteelemente (7) in einer Breitenrichtung des Laufflächengürtelaufbaus (21) unterteilt sind.

5. Herstellungsverfahren für einen radialen pneumatischen Reifen nach Anspruch 4, bei dem eine Breite (W₁) von jeder der unterteilten Halteoberflächen (8a, 8b) von jedem Halteelement (7) auf 5 bis 30 % der Breite (W₂) einer innersten laminierten Gürtelschicht (22) des Laufflächengürtelaufbaus (21) festgelegt ist.

6. Laufflächengürtelaufbau-Übertragungsvorrichtung (1) zum Übertragen eines Laufflächengürtelaufbaus (21), die umfasst:
eine Mehrzahl von Halteelementen (7) zum Halten des Laufflächengürtelaufbaus (21) von einer Außenumfangsseite,
bei der eine Krümmung, bei der ein Innendurchmesser zur Außenseite in einer Breitenrichtung des Laufflächengürtelaufbaus verringert wird, an Halteoberflächen (8, 8a, 8b) der entsprechenden Halteelemente (7) verliehen wird,
**dadurch gekennzeichnet, dass**:
Backen (9) auf den Halteoberflächen (8, 8a, 8b) der entsprechenden Halteelemente (7) zum Halten des Laufflächengürtelaufbaus (21) in einem Zustand vorgesehen sind, in dem die Halteelemente (7) mit beiden Seiten des Laufflächengürtelaufbaus (21) in Kontakt kommen aber nie mit dem Zentrumsabschnitt des Laufflächengürtelaufbaus (21) in Kontakt kommen, wenn der gehaltene Laufflächengürtelaufbau (21) an einen primären Reifenrohling (11), der in einer Ringform aufgepumpt ist, mittels Druck gebunden wird.

## Revendications

1. Procédé de production d'un bandage pneumatique radial comprenant les étapes de:
former un bandage pneumatique primaire à l'état vert (11) comportant une couche de carcasse (12);
former un ensemble ceinture-bande de roulement cylindrique (21) comportant des couches de ceinture (22);
transférer l'ensemble ceinture-bande de roulement (21) au côté périphérique extérieur du bandage pneumatique primaire à l'état vert (11) en utilisant un appareil de transfert (1); et
lier par pression l'ensemble ceinture-bande de roulement (21) au bandage pneumatique primaire à l'état vert (11) gonflé en une forme toroïdale,
où le bandage pneumatique primaire à l'état vert (11) et l'ensemble ceinture-bande de roulement (21) sont liés par pression l'un à l'autre dans un état où l'appareil de transfert permet le gonflage d'une portion centrale de l'ensemble ceinture-bande de roulement (21) tout en retenant les deux côtés de l'ensemble ceinture-bande de roulement (21),
**caractérisé en ce que**:
des éléments de retenue (7) de l'appareil de transfert (1) retiennent l'ensemble ceinture-bande de roulement (21) dans un état où chaque élément de retenue (7) vient en contact avec les deux côtés de l'ensemble ceinture-bande de roulement (21) mais ne vient jamais en contact avec la portion centrale de l'ensemble ceinture-bande de roulement (21).

2. Procédé de production d'un bandage pneumatique radial selon la revendication 1, dans lequel l'appareil de transfert (1) comporte une pluralité d'éléments de retenue (7) qui retiennent l'ensemble ceinture-bande de roulement (21) depuis un côté périphérique extérieur, et où chaque élément de retenue (7) possède une structure dans laquelle une courbure apte à réduire un diamètre intérieur vers l'extérieur dans le sens de la largeur de l'ensemble ceinture-bande de roulement (21) est conférée aux surfaces de retenue (8, 8a, 8b) des éléments de retenue respectifs (7).

3. Procédé de production d'un bandage pneumatique radial selon la revendication 2, dans lequel des raidisseurs (9) sont réalisés sur les surfaces de retenue (8) des éléments de retenue respectifs (7).

4. Procédé de production d'un bandage pneumatique radial selon la revendication 1, dans lequel l'appareil de transfert (1) comporte plusieurs éléments de retenue (7) qui retiennent l'ensemble ceinture-bande de roulement (21) depuis un côté périphérique extérieur, et où chaque élément de retenue (7) a une structure dans laquelle les surfaces de retenue (8, 8a, 8b) des éléments de retenue respectifs (7) sont divisées dans le sens de la largeur de l'ensemble ceinture-bande de roulement (21).

5. Procédé de production d'un bandage pneumatique radial selon la revendication 4, dans lequel une largeur (W₁) de chacune des surfaces de retenue divisées (8a, 8b) de chaque élément de retenue (7) est réglée à 5 jusqu'à 30% d'une largeur (W₂) d'une couche de ceinture laminée la plus intérieure (22) de l'ensemble ceinture-bande de roulement (21).

6. Appareil de transfert d'un ensemble de ceinture-bande de roulement (1) pour transférer un ensemble de ceinture-bande de roulement (21), comprenant:
plusieurs éléments de retenue (7) pour retenir l'ensemble ceinture-bandage de roulement (21) depuis un côté périphérique extérieur,
où une courbure apte à réduire un diamètre intérieur vers l'extérieur dans le sens de la largeur de l'ensemble ceinture-bande de roulement est donnée aux surfaces de retenue (8, 8a, 8b) des éléments de retenue respectifs (7),
**caractérisé en ce que**:
des raidisseurs (9) sont prévus sur les surfaces de retenue (8, 8a, 8b) des éléments de retenue respectifs (7) pour retenir l'ensemble ceinture-bande de roulement (21) dans un état où les éléments de retenue (7) viennent en contact avec les deux côtés de l'ensemble ceinture-bande de roulement (21) mais ne vient jamais en contact avec la portion centrale de l'ensemble ceinture-bande de roulement (21) lorsque l'ensemble ceinture-bande de roulement (21) retenu est lié par pression à un bandage pneumatique primaire à l'état vert (11) gonflé en une forme toroïdale.
